# EUROPEAN PATENT APPLICATION

(11) **EP 4 443 639 A1**
(43) Date of publication of application: **09.10.2024**
(21) Application number: 23863562.7
(22) Date of filing: 08.09.2023
(51) Int. Cl.: H01M 50/591, H01R 13/527, H01M 50/502, H01M 50/209

(54) **BUSBAR HAVING IMPROVED FLAME RESISTANCE, AND BATTERY PACK INCLUDING SAME**

(30) Priority: 08.09.2022 KR 20220114234; 07.09.2023 KR 20230118950
(71) Applicant: LG Energy Solution, Ltd., Seoul 07335 (KR)
(72) Inventor: YUN, Sun Woo, Daejeon 34122 (KR)
(74) Representative: Goddar, Heinz J.
(86) International application number: PCT/KR2023/013530
(87) International publication number: WO 2024/054098

(57) **Abstract**

The present invention relates to a busbar including a metal plate and a plurality of insulating members added to an outer surface of the metal plate, wherein at least some of the plurality of insulating members form a chemical bond with the metal plate, whereby insulation is secured in the event of fire, and therefore safety is improved.

## Description

### [Technical Field]

This application claims the benefit of priority to Korean Patent Application No. 2022-0114234 filed on September 8, 2022 and Korean Patent Application No. 2023-0118950 filed on September 7, 2023, the disclosures of which are incorporated herein by reference in their entirety.

The present invention relates to a busbar with improved flame resistance that connects battery modules to each other, and more particularly to a busbar configured such that a plurality of insulating members is added to a metal plate made of an electrically conductive metal material in order to protect the metal plate from the outside, whereby flame resistance is improved, and a battery pack including the same.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Required capacities of lithium secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

As kinds of devices using lithium secondary batteries as an energy source expand, as described above, the application of lithium secondary batteries to devices that require high capacity and high output has also expanded.

In line with this trend, there has been an increase in the manufacture and use of a battery module, in which a plurality of battery cells is electrically connected to each other, and a battery pack, in which battery modules are connected to each other in series and/or parallel.

Meanwhile, a busbar is widely used as a means for electrical connection between the battery modules, and is useful as a large current conduction means since the busbar is capable of allowing large current to stably flow therethrough even with a relatively small thickness compared to a cable.

In general, the busbar may be provided in the form of a metal bar, such as copper or aluminum, which exhibits excellent electrical conductivity, and the remaining part of the metal bar, excluding opposite ends connected to terminals, is covered with a tube or an injection-molded product for safety.

Specifically, the busbar may be used in a form in which a metal plate including copper or aluminum, which exhibits excellent electrical conductivity, is disposed inside, and the remaining part of an outer surface of the metal plate, excluding opposite ends for coupling, is covered with a tube or an injection-molded product in order to secure electrical insulation.

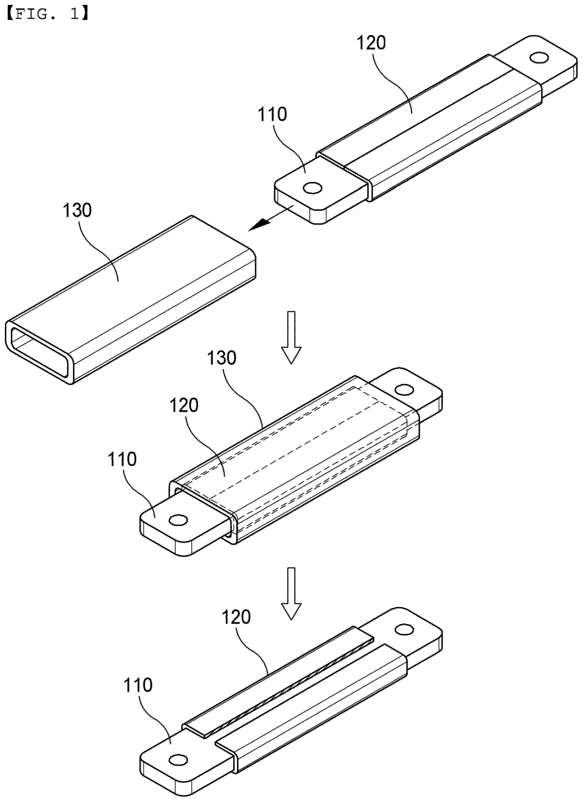

In connection therewith, FIG. 1 is a perspective view showing a conventional busbar before and after being damaged by fire.

A busbar is used in order to achieve electrical connection between battery modules, and FIG. 1 shows the structure of a busbar and the state in which the busbar is damaged by fire.

Referring to FIG. 1, the conventional busbar includes a metal plate 110 made of an electrically conductive material, an insulating tape 120 configured to enclose the remaining part of an outer surface of the metal plate 110, excluding opposite ends thereof, and a silicone tube 130 added to an outer surface of the insulating tape 120.

Each of the insulating tape 120 and the silicone tube 130 is made of an electrically insulating material, whereby it is possible to secure insulation for configurations other than devices coupled to opposite ends of the busbar.

When a battery cell in a battery pack ignites or explodes, thermal energy of the battery cell may be transferred to a battery cell adjacent thereto, whereby fire breaks out. When the silicone tube 130 of the busbar connecting the battery modules is damaged by fire in the battery cell, the insulating tape 120 may open, whereby the metal plate 110 in the insulating tape may be exposed.

When the metal plate thus exposed comes into contact with an electrically conductive battery pack structure, short circuit may occur, and such internal short circuit may form an electrically closed circuit in the battery pack, which may accelerate thermal runaway in the battery pack.

In connection therewith, Patent Document 1 discloses a busbar including a metal bar made of a metal material, an insulating tube configured to cover the remaining part of the metal bar, excluding opposite ends thereof, a fireproof tape configured to enclose the metal bar in the insulating tube, and a bandage member made of a fire-resistant material, the bandage member being interposed between the insulating tube and the fireproof tape, the bandage member being configured to enclose the fireproof tape so as to be fixed to the metal bar.

In Patent Document 1, the bandage member may strongly fix the fireproof tape even though the insulating tube is burned away by fire, whereby direct contact between the metal bar and a surrounding metal object may be prevented, and therefore it is possible to prevent short circuit.

Patent Document 2 discloses a busbar including a metal bar made of a metal material, a bandage member configured to enclose the remaining part of the metal bar, excluding opposite ends thereof, and an insulating tube configured to enclose both the metal bar and the bandage member.

In Patent Document 2, the bandage member provided on a surface of the metal bar remains attached to the surface of the metal bar even in the event of fire, whereby the metal bar does not directly contact a surrounding metal object, and therefore it is possible to prevent short circuit.

Since each of the busbar of Patent Document 1 and the busbar of Patent Document 2 further includes a bandage member, however, the thickness and weight of the busbar may be increased.

When fire breaks out in the battery pack, the tube or the injection-molded product, which encloses the metal bar, may be burned away, whereby the metal bar may be exposed to the outside. When the metal bar exposed to the outside comes into contact with a surrounding metal object, short circuit may occur.

In addition, there is no way to actively respond to flames using only a busbar having a heat-resistant insulator that is resistant to fire.

Therefore, there is a need for a busbar capable of preventing flame propagation between battery modules in the event of fire while preventing a metal bar or a metal plate provided therein from being exposed even though an insulating material added to an outer surface of the busbar is burned away by fire.

### (Prior Art Documents)

(Patent Document 1) Korean Patent Application Publication No. 2021-0050983 (2021.05.10)
(Patent Document 2) Korean Patent Application Publication No. 2021-0141095 (2021.11.23)

### [Disclosure]

### [Technical Problem]

The present invention has been made in view of the above problems, and it is an object of the present invention to provide a busbar configured such that a plurality of insulating members is added to an outer surface of a metal plate made of an electrically conductive metal material in order to protect the metal plate from the outside, whereby flame resistance is improved, and a battery pack including the same.

### [Technical Solution]

A busbar according to the present invention includes a metal plate and a plurality of insulating members added to an outer surface of the metal plate, wherein at least some of the plurality of insulating members form a chemical bond with the metal plate.

The plurality of insulating members may include a first insulating member added to the metal plate and a second insulating member added to the first insulating member so as to enclose an outer surface of the first insulating member, wherein the first insulating member may be made of an inorganic material.

The inorganic material may be an inorganic metal oxide.

The inorganic metal oxide may be at least one selected from the group consisting of aluminum oxide (Al₂O₃), aluminum nitride (AlN), zirconium oxide (ZrO₂), titanium dioxide (TiO₂), calcium carbonate (CaCO₃), silicon dioxide (SiO₂), zinc oxide (ZnO), and cerium oxide (CeO₂).

The first insulating member may be in the form of a nano-inorganic oxide dispersion.

The second insulating member may be ceramized at high temperatures.

The second insulating member may be made of at least one selected from the group consisting of boron-based, phosphorus-based, and silicon-based flame retardant coating agents.

The second insulating member may include at least one selected from the group consisting of magnesium hydroxide (MDH), monoammonium phosphate (MAP), and aluminum hydroxide (ATH).

The second insulating member may include at least one selected from the group consisting of fire-resistant silicone, fire-resistant plastic, polyphenylene sulfide, polyetheretherketone, polyphthalamide, polyamide, polysulfone, polyethersulfone, polyetherimide, acrylic fiber, and polybenzimidazole.

The metal plate may be made of an electrically conductive material including copper, aluminum, nickel, gold, silver, or a combination thereof.

Each of the plurality of insulating members may be in the form of an attachable tape or foam that can be coated, or may be formed by applying a slurry having an insulating material dispersed therein, by adding a heat shrinkable tube, by insert molding, or by coupling between an upper case and a lower case each having a hinge structure or a fastening structure.

In addition, the present invention provides a battery pack including a plurality of battery modules electrically connected to each other via the busbar.

In the battery pack, the plurality of battery modules may be received in a battery pack housing, the battery pack housing including a grid-shaped partition wall installed in the battery pack housing, one battery module may be located in one grid space, and the busbar may be disposed so as to traverse an upper part of the grid-shaped partition wall to electrically connect the plurality of battery modules to each other.

In addition, the present invention may provide various combinations of the above solving means.

### [Advantageous Effects]

As is apparent from the above description, it is possible to secure insulation of a busbar according to the present invention even when the busbar is in contact with an electrically conductive object therearound in the event of fire.

In addition, a first insulating member made of aluminum oxide forms a chemical bond with a metal plate made of Cu at high temperatures, whereby the first insulating member is firmly bonded to a metal plate, and therefore it is possible to physically protect the busbar.

In addition, a part of a second insulating member is ceramized while swelling, whereby it is possible to maintain insulation and airtight properties.

### [Description of Drawings]

FIG. 1 is a perspective view showing a conventional busbar before and after being damaged by fire.
FIG. 2 is a plan view and a vertical sectional view of a busbar according to the present invention.
FIG. 3 is a vertical sectional view showing the busbar according to the present invention before and after being damaged by fire.
FIG. 4 is a perspective view and a vertical sectional view showing the state in which a busbar configured to connect two battery modules to each other is disposed so as to extend through a partition wall.
FIG. 5 is a perspective view of a battery pack in which a plurality of battery modules is received in a battery pack housing partitioned by a partition wall.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is the to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the drawings.

A busbar according to the present invention is a type of busbar used as an electrical connection means, an inter-module busbar used in this specification refers to a busbar used as a means configured to interconnect battery modules disposed in a battery pack, and the term "busbar" may be understood to include the term "inter-module busbar".

In one specific example, the length of the busbar may be set in consideration of the distance between battery modules to be connected, and the width and thickness of the busbar may be set in consideration of the amount of current that flows through the busbar and the resistance of the busbar.

In addition, the shape of the busbar may be configured in consideration of the positions of connectors of the battery modules, and the busbar may be formed so as to have any of various shapes, such as a shape in which the busbar is bent upwards or downwards so as to be parallel to an overall width thereof, an L-shape in which the busbar is bent by 90 degrees in the plane, or a [-shape or a 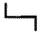 -shape in which the busbar is bent by 90 degrees at opposite ends thereof in the plane.

Since each of the opposite ends of the busbar is usually used as a connection portion for coupling to an external device, a structure for connection, such as a fastening hole for bolt fastening, is provided.

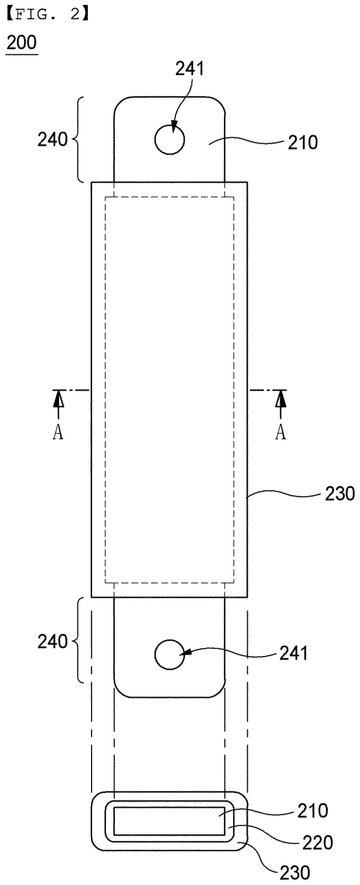

FIG. 2 is a plan view and a vertical sectional view of a busbar according to the present invention, wherein a section taken along A-A in the plan view at an upper part of FIG. 2 is shown as a vertical sectional view at a lower part of FIG. 2.

Referring to FIG. 2, the busbar 200 includes a metal plate 210 for electrical connection and a plurality of insulating members added to an outer surface of the metal plate 210.

The plurality of insulating members includes a first insulating member 220 configured to enclose at least a part of the metal plate 210, the first insulating member forming a chemical bond with a metal constituting the metal plate 210 at high temperature environments such as flame generation, and a second insulating member 230 added to the first insulating member 220 so as to enclose an outer surface thereof, the second insulating member being configured to be ceramized at high temperatures.

The busbar may include a connection structure formed at each of opposite ends thereof in order to connect battery modules, and may be configured to have a structure in which a metal plate formed in the shape of a metal bar made of an electrically conductive metal material is provided and a plurality of insulating members is added to the part of the metal plate excluding opposite ends thereof, wherein the plurality of insulating members is disposed so as to have a plurality of layered structures.

The metal constituting the metal plate may be copper, aluminum, nickel, gold, silver, or a combination thereof, and each of the plurality of insulating members may be made of at least one of plastic, inorganic oxide, and nonconductive metal.

The first insulating member 220 and the second insulating member 230 are not added to surfaces of opposite ends of the metal plate 210, and the ends of the metal plate 210 are exposed to constitute electrical connection portions 240.

At least one opening 241 for connection is formed in each of the electrical connection portions 240.

One of the electrical connection portions 240 formed at the opposite ends of the busbar 200 may be connected to a positive electrode connector of a first battery module, and the other may be connected to a negative electrode connector of a second battery module. Specifically, when a bolting operation using bolts and nuts is performed such that the busbar is connected to the connectors of the battery modules, the bolts may be inserted into the openings 241 and the nuts may be fastened to the bolts, whereby the busbar 200 may be connected to the first battery module and the second battery module.

The temperature at which the first insulating member forms a chemical bond with the metal plate may be from 800°C to 1,500°C. In general, the ignition temperature when a battery pack is in an abnormal state is 1,000°C or higher. When the battery pack is in an abnormal state, therefore, a chemical bond 221 between the metal constituting the metal plate, in particular copper, and the material constituting the first insulating member, in particular aluminum oxide (Al₂O₃), may be formed.

The material formed by chemical reaction between Cu, which is the material of the metal plate, and aluminum oxide, which is the material of the first insulating member, may include at least one of CuAlO₂ and CuAl₂O.

That is, a chemical bond between Cu and Al₂O₃ may occur to form CuAlO₂ and/or CuAl₂O, wherein a strong bond similar to welding is formed between the metal plate and the first insulating member by the material formed at the interface between the metal plate and the first insulating member. In addition, the metal plate may be physically protected from surrounding components due to CuAlO₂ and/or CuAl₂O, whereby it is possible to eliminate the occurrence of an additional abnormal phenomenon such as short circuit.

The first insulating member may be made of an inorganic material, wherein the inorganic material may be an inorganic metal oxide.

The inorganic metal oxide may be at least one selected from the group consisting of aluminum oxide (Al₂O₃), aluminum nitride (AlN), zirconium oxide (ZrO₂), titanium dioxide (TiO₂), calcium carbonate (CaCO₃), silicon dioxide (SiO₂), zinc oxide (ZnO), and cerium oxide (CeO₂).

The first insulating member may be a nano-inorganic oxide dispersion applied to the outer surface of the metal plate.

The nano-inorganic oxide dispersion may include at least one selected from the group consisting of chlorinated alkyd, brominated epoxy resin, aluminum hydroxide, chlorinated paraffin, and antimony oxide.

In addition, the nano-inorganic oxide dispersion may be in the form of at least one additive selected from the group consisting of halogen, phosphorus, nitrogen, mineral, and oxide or in the form of an expandable nanofiller.

Since the second insulating member 230 constitutes the outermost surface with which flames come into direct contact in the event of fire, the second insulating member may include at least one selected from the group consisting of fire-resistant silicone, fire-resistant plastic, polyphenylene sulfide, polyetheretherketone, polyphthalamide, polyamide, polysulfone, polyethersulfone, polyetherimide, acrylic fiber, and polybenzimidazole.

Specifically, the second insulating member 230 may be made of fire-resistant silicone that is ceramized when exposed to flames or high-temperature gases.

Fire-resistant silicone exhibits the performance of a general silicone resin at room temperature, but at high temperatures, the structure of fire-resistant silicone is changed to a ceramized structure, whereby fire-resistant silicone has ceramic properties. This phenomenon of fire-resistant silicone is referred to as ceramization in this specification. Fire-resistant silicone remains unchanged in shape at high temperatures. In addition, fire-resistant silicone has high flame resistance, and therefore flames may not pass through fire-resistant silicone.

The second insulating member 230 may be made of a material that is ceramized at high temperatures. For example, when a battery cell in a battery module ignites and explodes and heat is transferred to the busbar coupled to the battery module, the second insulating member may be ceramized by gas or flames emitted from the battery cell, but the shape of second insulating member may be maintained.

Consequently, it is possible to prevent a conventional problem in which, when a silicone tube is added to an outer surface of a metal plate, the silicone tube is burned away, whereby the metal plate is exposed.

Meanwhile, the second insulating member may include expandable flame-retardant silicone that is expandable at high temperatures.

That is, when a high-temperature environment is formed due to fire, the second insulating member swells while being ceramized from the outside thereof. When the busbar, which is disposed so as to extend through an opening, expands, a gap in the opening may be blocked, and therefore it is possible to prevent propagation of flames or sparks through the gap in the opening.

Consequently, the metal plate is not exposed to the outside at the parts of the busbar to which the first insulating member and the second insulating member are added, and with high heat resistance properties of the first insulating member and the second insulating member, it is possible to secure heat resistance and insulation of the busbar.

The first insulating member or the second insulating member may be added using any one of the following methods depending on the type of the material constituting the same, and the method of adding the first insulating member and the method of adding the second insulating member may be different from each other. For example, the first insulating member or the second insulating member may be configured in a form of an attachable tape with an adhesive surface on the inner surface or foam that can be coated, or may be formed by applying a slurry having an insulating material dispersed therein, by adding a heat shrinkable tube, by insert molding, or by coupling between an upper case and a lower case each having a hinge structure or a fastening structure.

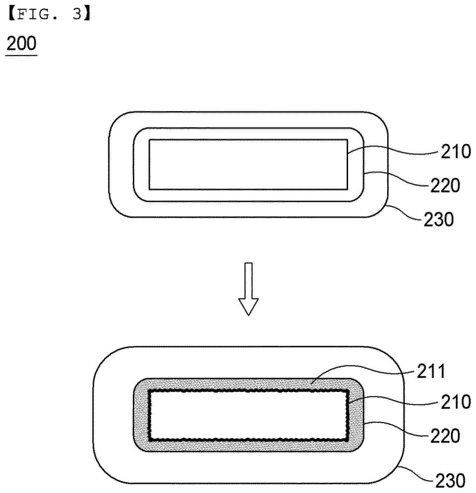

FIG. 3 is a vertical sectional view showing the busbar according to the present invention before and after being damaged by fire.

FIG. 3 shows two steps of a process in which the busbar is damaged by fire, wherein time progresses from top to bottom.

Referring to an upper figure of FIG. 3, which is a vertical sectional view of a normal busbar 200 in which no fire breaks out, an outer surface of the innermost metal plate 210 is sequentially enclosed by the first insulating member 220, which is made of an inorganic metal oxide having insulating properties, and the second insulating member 230, which is ceramized at high temperatures.

Referring to a lower figure of FIG. 3, when fire breaks out in a battery cell, flames or high-temperature gases may be transferred to the busbar, whereby a chemical bond 221 may be formed between the metal plate, which is made of metal, particularly copper, and the first insulating member, which is made of an inorganic metal oxide.

The second insulating member may exhibit expansion properties in which the second insulating member swells as ceramization progresses. When the busbar is disposed so as to extend through the opening, therefore, the opening may be blocked by the swelling properties of the second insulating member. If there is a gap in the opening, flames or sparks in the battery module in which fire breaks out may be discharged through the gap, and the gap may be filled with the expanded second insulating member, whereby it is possible to prevent propagation of the flames or sparks to a neighboring battery module through the gap.

The second insulating member may be made of at least one selected from the group consisting of boron-based, phosphorus-based, and silicon-based flame retardant coating agents.

The second insulating member may include at least one of magnesium hydroxide (MDH), monoammonium phosphate (MAP), and aluminum hydroxide (ATH).

The insulation performance of the second insulating member may be improved by the components described above.

As described above, the first insulating member 220 prevents short circuit of the metal plate through the chemical bond 221 with the metal plate, and the second insulating member 230 is ceramized at high temperatures to secure high insulation. Even though a high-temperature environment is formed due to fire, therefore, the state in which the first insulating member 220 and the second insulating member 230 added to the outside of the metal plate enclose the metal plate may be maintained, whereby the metal plate in the busbar is not exposed.

The first insulating member may be made of aluminum oxide (Al₂O₃). When fire breaks out due to abnormality of the battery module, the first insulating member is not burned away, unlike an organic material such as plastic used as an existing general insulating member, whereby it is possible to maintain the insulation properties of the busbar.

In a normal state of the battery module, electrical and physical connection between battery modules is formed through the busbar including the metal plate made of copper (Cu), and insulation of the busbar from surrounding electrical components may be secured by the plurality of insulating members added to the busbar.

In an ignition state of the battery module, the internal temperature is 1,000°C or higher, and therefore a chemical bond between the metal plate made of copper and the first insulating member made of aluminum oxide may proceed.

As a result of the chemical bond between Cu and Al₂O₃, the metal plate and the first insulating member are bonded to each other, similarly to welding. The metal plate is physically protected from surrounding electrical components by the first insulating member firmly bonded to the outer surface of the metal plate, as described above, whereby it is possible to eliminate the occurrence of an additional abnormal phenomenon such as short circuit.

The second insulating member may be made of fire-resistant silicone. When fire breaks out due to abnormality of the battery module, the second insulating member is not burned away, unlike an organic material such as plastic used as an existing general insulating member, whereby it is possible to maintain the insulation properties of the busbar.

In a normal state of the battery module, the second insulating member remains enclosing the metal plate, which is made of copper, and the first insulating member. The second insulating member has elastic properties under normal conditions, whereby the second insulating member protects the brittle first insulating member, e.g., ceramic. In addition, an additional insulating layer may be formed on the first insulating member in order to improve the insulation function.

In an ignition state of the battery module, the second insulating member including fire-resistant silicone is ceramized from the part exposed to the outside. However, the second insulating member may expand while being ceramized depending on the material of the second insulating member.

That is, a conventional busbar insulating member simply covers a metal plate made of Cu, whereas the insulating member according to the present invention is configured to have a structure in which the first insulation member is added to the periphery of the metal plate made of Cu so as to enclose the same and the second insulation member including the fire-resistant silicone material supports the metal plate while enclosing the outermost side of the busbar.

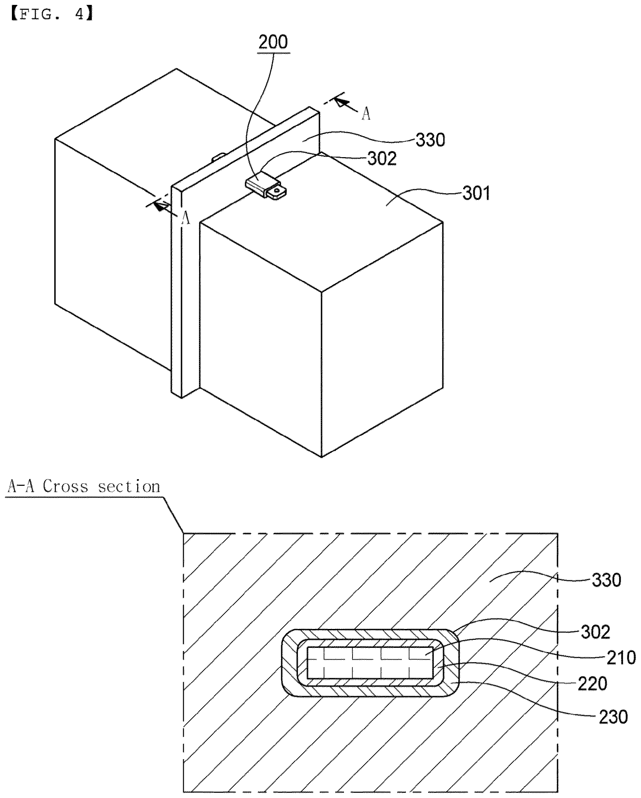

FIG. 4 is a perspective view and a vertical sectional view showing the state in which a busbar configured to connect two battery modules to each other is disposed so as to extend through a partition wall.

Referring to FIG. 4, a partition wall 330 for flame prevention is formed between the two battery modules 301, and a through-hole 302, through which the busbar 200 extends, is formed in the partition wall. The busbar 200 is disposed so as to extend through the through-hole 302 in order to electrically connect the two battery modules 301 to each other.

When the second insulating member of the busbar 200 includes expandable flame retardant silicone, the second insulating member may expand and block the through-hole 302 if the temperature of the busbar increases due to fire, whereby it is possible to prevent flames and sparks from propagating to an adjacent battery module.

Alternatively, the position and size of the partition wall may be set in order to guide the direction of spread of flames and sparks generated in the battery module.

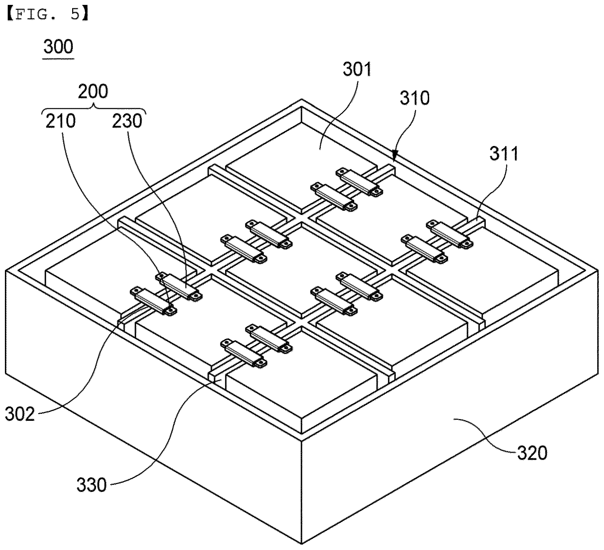

FIG. 5 is a perspective view of a battery pack in which a plurality of battery modules is received in a battery pack housing partitioned by a partition wall.

Referring to FIG. 5, the battery pack 300 is configured such that the plurality of battery modules 301 is electrically connected to each other via the busbar 200 according to the present invention. Although FIG. 5 shows a battery pack including nine battery modules, which is an example for illustrative purposes only, the arrangement and number of battery modules constituting the battery pack and the coupling position and shape of a busbar used to connect the battery modules to each other are not limited thereto.

In the battery pack 300 according to the present invention, the plurality of battery modules is received in the battery pack housing , a grid-shaped partition wall is installed in the battery pack housing , one battery module is located in one grid space, and the busbar is disposed so as to traverse an upper surface 311 of the partition wall 330 in order to electrically connect the plurality of battery modules to each other.

The lattice-shaped partition wall may perform a flame prevention function. Even though fire breaks out in any one of the battery modules, therefore, it is possible to prevent spread of flames or sparks to a battery module adjacent thereto.

In addition, when the busbar is disposed so as to traverse the upper surface 311 of the partition wall 330, the metal plate is not exposed to the outside by the first insulating member and the second insulating member in the event of fire in the battery module. Even though the busbar comes into contact with a component constituting the battery pack and made of an electrically conductive metal material at the upper surface 311 of the partition wall 330, therefore, insulation between the busbar and the component made of the electrically conductive metal material may be maintained.

In the present invention, as described above, the first insulating member and the second insulating member added to the metal plate are not burned away and remain added to the outer surface of the metal plate in the event of fire, whereby the metal plate may not be exposed to the outside. Even though the busbar is in contact with a metal component adjacent thereto, therefore, insulation of the busbar may be maintained.

Those skilled in the art to which the present invention pertains will appreciate that various applications and modifications are possible within the category of the present invention based on the above description.

### (Description of Reference Numerals)

- 110, 210:: Metal plates
- 120:: Insulating tape
- 130:: Silicone tube
- 200:: Busbar
- 220:: First insulating member
- 221:: Chemical bond
- 230:: Second insulating member
- 240:: Electrical connection portion
- 241:: Opening
- 300:: Battery pack
- 301:: Battery module
- 302:: Through-hole
- 310:: Pack frame
- 311:: Upper surface of pack frame
- 320:: Battery pack housing
- 330:: Partition wall

## Claims

1. A busbar comprising:
a metal plate; and
a plurality of insulating members added to an outer surface of the metal plate,
wherein at least some of the plurality of insulating members form a chemical bond with the metal plate.

2. The busbar according to claim 1, wherein the plurality of insulating members comprises a first insulating member added to the metal plate and a second insulating member added to the first insulating member so as to enclose an outer surface of the first insulating member, and the first insulating member is made of an inorganic material.

3. The busbar according to claim 2, wherein the inorganic material is an inorganic metal oxide.

4. The busbar according to claim 3, wherein the inorganic metal oxide is at least one selected from a group consisting of aluminum oxide (Al₂O₃), aluminum nitride (AlN), zirconium oxide (ZrO₂), titanium dioxide (TiO₂), calcium carbonate (CaCO₃), silicon dioxide (SiO₂), zinc oxide (ZnO), and cerium oxide (CeO₂).

5. The busbar according to claim 2, wherein the first insulating member is in a form of a nano-inorganic oxide dispersion.

6. The busbar according to claim 2, wherein the second insulating member is ceramized at high temperatures.

7. The busbar according to claim 6, wherein the second insulating member is made of at least one selected from a group consisting of boron-based, phosphorus-based, and silicon-based flame retardant coating agents.

8. The busbar according to claim 2, wherein the second insulating member comprises at least one selected from a group consisting of magnesium hydroxide (MDH), monoammonium phosphate (MAP), and aluminum hydroxide (ATH).

9. The busbar according to claim 2, wherein the second insulating member comprises at least one selected from a group consisting of fire-resistant silicone, fire-resistant plastic, polyphenylene sulfide, polyetheretherketone, polyphthalamide, polyamide, polysulfone, polyethersulfone, polyetherimide, acrylic fiber, and polybenzimidazole.

10. The busbar according to claim 1, wherein the metal plate is made of an electrically conductive material comprising copper, aluminum, nickel, gold, silver, or a combination thereof.

11. The busbar according to claim 1, wherein each of the plurality of insulating members is in a form of an attachable tape or foam that can be coated, or is formed by applying a slurry having an insulating material dispersed therein, by adding a heat shrinkable tube, by insert molding, or by coupling between an upper case and a lower case each having a hinge structure or a fastening structure.

12. A battery pack comprising a plurality of battery modules electrically connected to each other via the busbar according to any one of claims 1 to 11.

13. The battery pack according to claim 12, wherein the plurality of battery modules is received in a battery pack housing, the battery pack housing including a grid-shaped partition wall installed in the battery pack housing, one battery module is located in one grid space, and the busbar is disposed so as to traverse an upper part of the grid-shaped partition wall to electrically connect the plurality of battery modules to each other.
